## Europäisches Patentamt

## European Patent Office

## Office européen des brevets

(11) Veröffentlichungsnummer: **0 199 028**
**B1**

(12) **EUROPÄISCHE PATENTSCHRIFT**

(45) Veröffentlichungstag der Patentschrift:
**02.08.89**

(51) Int. Cl.⁴: **H04Q 3/54,** H04Q 3/36

(21) Anmeldenummer: **86102731.6**

(22) Anmeldetag: **03.03.86**

(54) Nachrichtenübermittlungsverfahren für Fernmeldeanlagen, insbesondere Fernsprechvermittlungsanlagen, in denen für über bidirektionale Nachrichtenwege zu übermittelnde Nachrichten eine Längenangabe und eine Artinformation gebildet wird.

(30) Priorität: **28.03.85 DE 3511377**

(43) Veröffentlichungstag der Anmeldung:
**29.10.86 Patentblatt 86/44**

(45) Bekanntmachung des Hinweises auf die Patenterteilung:
**02.08.89 Patentblatt 89/31**

(84) Benannte Vertragsstaaten:
**AT BE CH DE FR GB IT LI NL SE**

(56) Entgegenhaltungen:
**EP-A- 0 114 073**

(73) Patentinhaber: **Siemens Aktiengesellschaft Berlin und München, Wittelsbacherplatz 2, D-8000 München 2(DE)**

(72) Erfinder: **Mattis, Renate, Brehmstrasse 212, D-8000 München 90(DE)**
Erfinder: **Seidel, Günther, Ing. grad., August-Zeune-Weg 4, D-8000 München 70(DE)**
Erfinder: **Übelhack, Heinrich, Ing. grad., Am Büchl 35, D-8024 Oberhaching(DE)**
Erfinder: **Homer, Russel D., Wolfratshauserstrasse 135a, D-8000 München 71(DE)**

**Beschreibung**

Die Erfindung betrifft ein Nachrichtenübermittlungsverfahren für Fernmeldeanlagen, insbesondere Fernsprechvermittlungsanlagen, in denen in Zusammenhang von über bidirektionale Nachrichtenwege zu übermittelnden Nachrichten jeweils einer von einer Mehrzahl von verschiedenen Nachrichtenarten eine Längenangabe gebildet und vor der Nachrichtenübermittung übertragen wird, sowie eine die jeweilige Nachrichtenart bezeichnende Artinformation gebildet wird.

Ein Nachrichtenübermittlungsverfahren dieser Art ist bereits durch die deutsche Patentschrift 1 801 658 (VPA 67/3118) bekannt. Darin wird eine Längenangabe bezüglich einer zu übertragenden Nachricht gebildet. Die zu übertragenden Nachrichten können einen unterschiedlich großen Umfang aufweisen. Die Längenangabe für eine jeweils zu übertragende Nachricht betrifft ihren Umfang. Um den Nachteil von Füllinformationen zur Erlangung von zu übertragenden Nachrichtenblöcken einheitlicher Länge oder der Notwendigkeit eines Schlußzeichens zu vermeiden, das sich von allen übrigen Nachrichtenzeichen unterscheiden müßte und dadurch das Zeichenspektrum einschränken würde, wird diese Längenangabe in dem genannten bekannten Falle einer Nachricht vorausgeschickt. Durch sie ist die sie jeweils empfangende Einrichtung immer von vornherein informiert darüber, wann die Übermittlung einer Nachricht jeweils beendet ist. Diese Längenangabe wird deshalb einer zu übermittelnden Nachricht von der sendenden Einrichtung zu der empfangenden Einrichtung hin immer jeweils vorausgeschickt.

Die oben erwähnte Artinformation wird in dem bekannten Falle aus der Adresse einer verbindungsindividuellen Schalteinrichtung abgeleitet, von der die jeweilige Nachricht, die zu übertragen ist, stammt. Aus dieser Geräteadresse ergibt sich jeweils, von welcher Nachrichtenart die anschließend zu übertragende Nachricht ist. Nachrichtenarten können zum Beispiel Wahlimpulsserien, Leitungskennzeichen (zum Beispiel Wahlendekennzeichen, Meldekennzeichen und dergleichen) und Gebührenzählimpulse sein. Aus der jeweiligen Ursprungsadresse wird in dem genannten bekannten Fall eine Artinformation abgeleitet, die die jeweilige Nachrichtenart angibt.

In dem bekannten Falle wird die genannte Artinformation erst in der empfangenden Einrichtung aus der jeweiligen Ursprungsadresse abgeleitet und dient dazu, die übermittelte Nachricht empfangsseitig in Abhängigkeit von der jeweiligen Artinformation unterschiedlich zu deuten und zu werten. In dem genannten bekannten Falle wird die Artinformation in Zusammenhang mit der übermittelten Nachricht also nicht übertragen, sondern empfangsseitig aus der jeweiligen Ursprungsadresse abgeleitet. Dies geschieht nach einer Übertragung der Längenangabe, die der übermittelten Nachricht vorausgeschickt wird. Die Artinformation dient dazu, vom Nachrichteninhalt her gleiche Nachrichten unterschiedlich zu deuten, und zwar je nach der Ursprungsadresse.

Für die Erfindung besteht die Aufgabe, in einem Nachrichtenübermittlungsverfahren der eingangs angegebenen Art die Längenangabe und die Artinformation dazu auszunutzen, bei Beschränkungen und Schwankungen hinsichtlich der Aufnahmekapazität für zu übermittelnde Nachrichten einen störungsfreien Nachrichtenübermittlungsbetrieb zu gewährleisten.

Die Erfindung löst die gestellte Aufgabe dadurch, daß von einer Nachrichtenübermittlungseinrichtung, die eine Nachricht an eine andere Nachrichtenübermittlungseinrichtung abzugeben hat, eine der Nachrichtenart dieser Nachricht jeweils entsprechende Artinformation vorausgeschickt wird, und daß eine Längenangabe in Gegenrichtung übertragen wird, die angibt, für welchen durch die sich gegebenenfalls laufend ändernde Betriebssituation momentan gegebenen Umfang einer Nachricht der betreffenden Nachrichtenart die andere Nachrichtenübermittlungseinrichtung empfangsbereit ist, und daß die Artinformation zuerst und die Längenangabe danach übertragen wird.

Im Gegensatz zum bekannten Falle wird also die Längenangabe nicht in gleicher Richtung mit der Nachricht selber, sondern von der Nachrichtenübermittlungseinrichtung, die die Nachricht empfangen soll, zu der Nachrichtenübermittlungseinrichtung, die die Nachricht auszusenden hat, übertragen. Ferner wird die Artinformation nicht - wie im bekannten Falle - empfangsseitig aus einer mit der Nachricht übertragenen Adresse abgeleitet, sondern sie wird sendeseitig gebildet und der zu übermittelnden Nachricht vorausgeschickt. Ferner wird im Unterschied zum bekannten Falle die Artinformation zuerst übertragen, und zwar der Nachricht vorausgeschickt; die Längenangabe wird nach der Übermittlung der Artinformation und in Gegenrichtung übertragen. Erfindungsgemäß bezieht sich die Längenangabe auf die durch die Artinformation signalisierte jeweilige Nachrichtenart und gibt jeweils für diese den Umfang an, den eine zu übertragende Nachricht maximal haben darf. Die zurückübertragene Längenangabe sorgt bei einer durch die momentane Betriebssituation gegebenen beschränkten Aufnahmekapazität der empfangenden Einrichtung für Nachrichten der jeweils signalisierten Nachrichtenart gegebenenfalls dafür, daß die betreffende Nachrichtenübermittlung verhindert wird oder auf einen späteren Zeitpunkt verschoben wird, wodurch eine Verstümmelung von Nachrichten oder Engpässe beim Nachrichtenempfang vermieden werden, und daß die betreffende Nachrichtenübermittlung stattfinden kann, wenn eine dafür geeignete Betriebssituation wiedergekehrt ist.

Gemäß einer Weiterbildung der Erfindung ist vorgesehen, daß von der einen Nachrichtenübermittlungseinrichtung, in der mehrere Nachrichten verschiedener Arten zur Übermittlung an die andere Nachrichtenübermittlungseinrichtung vorliegen, dementsprechend mehrere Artinformationen der an die andere Nachrichtenübermittlungseinrichtung abzugebenden Nachrichten vorausgeschickt werden, und daß die andere Nachrichtenübermittlungseinrichtung eine Auswahl bezüglich der mehreren Nachrichtenarten trifft und eine entsprechende Artinformation an die eine Nachrichtenübermittlungseinrichtung zurückgibt und anschließend eine die ausgewählte Nachrichtenart betreffende Längenangabe überträgt.

Dadurch wird bei einem gleichzeitigen Vorliegen mehrerer Nachrichten unterschiedlicher Nachrich-tenarten ermöglicht, daß die Nachrichtenübermitt-lungseinrichtung, die eine der Nachrichten empfangen soll, lediglich bezüglich einer einzigen der verschiedenen Nachrichtenarten eine Längenangabe an die Nachrichtenübermittlungseinrichtung zu übertragen hat, in der gleichzeitig die mehreren Nachrichten übertragungsbereit vorliegen.

Eine andere Weiterbildung der Erfindung besteht darin, daß gleichzeitig mit der Artinformation in der Gegenrichtung ein jede der verschiedenen Nachrichtenarten betreffendes Sortiment von einzelnen artspezifischen Meldungen übertragen wird, von denen jede bezüglich je einer der verschiedenen Nachrichtenarten die Empfangsbereitschaft für eine Nachricht der jeweiligen Nachrichtenart meldet.

Dadurch wird die Möglichkeit geschaffen, daß bei Vorliegen von zu übermittelnden Nachrichten in beiden Nachrichtenübermittlungseinrichtungen gleichzeitig und unabhängig voneinander die betreffenden Artinformationen und die für die jeweilige Nachrichtenübermittlung in Gegenrichtung einschränkend maßgebenden Meldungen übertragen werden können, ohne daß die Meldungen in der einen Richtung auf die zugehörigen Artinformationen in der anderen Richtung warten müssen.

Eine weitere Ausgestaltung dieser Weiterbildung der Erfindung besteht darin, daß von jeder der bei-den Nachrichtenübermittlungseinrichtungen wenig-stens je eine Artinformation und je ein Sortiment von Meldungen zur jeweils anderen Nachrichtenübermittlungseinrichtung ausgesendet wird, daß in jeder der beiden Nachrichtenübermittlungseinrichtungen anhand der jeweils ausgesendeten Artinformation dementsprechend eine der empfangenen Meldungen ausgewählt wird, und daß für die von je-der der beiden Nachrichtenübermittlungseinrichtun-gen sendbaren Nachrichtenarten in beiden Nachrichtenübermittlungseinrichtungen Prioritätswerte gespeichert sind, und daß bei Gewinnung zweier ausgewählter Meldungen eine nach Maßgabe dieser Prioritätswerte ausgewählt wird. Durch diese Auswahl ist die Möglichkeit gegeben, daß die Längenangabe anschließend nur für die jeweils ausgewählte Nachrichtenart zu übertragen werden braucht, also nicht für sämtli che zunächst in Frage kommenden Nachrichtenarten, sondern lediglich für eine einzige Nachrichtenart.

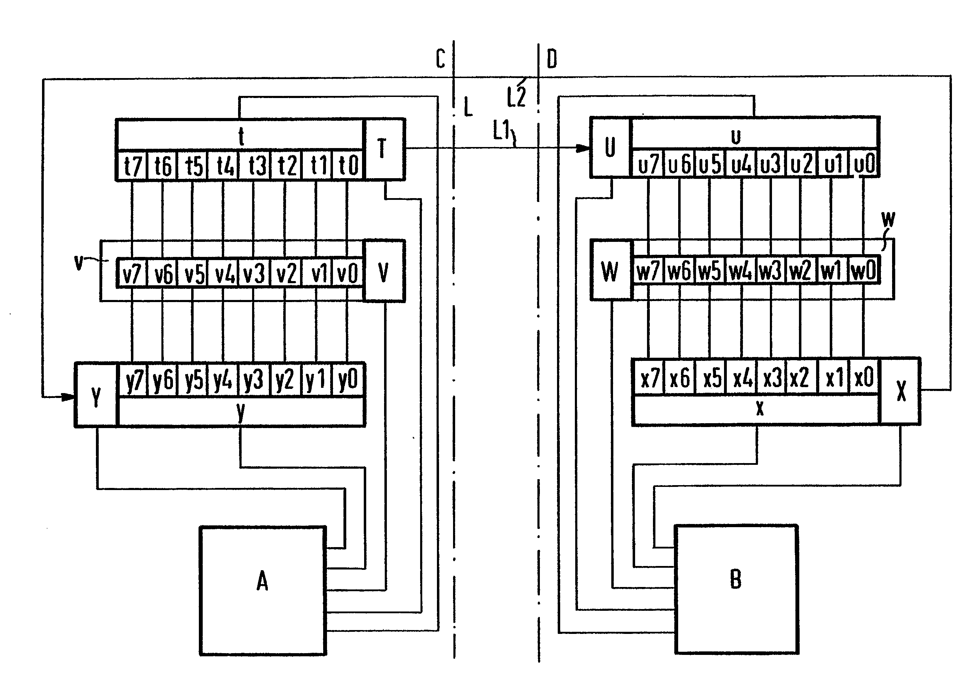

In der Zeichnung ist ein Ausführungsbeispiel der Erfindung nur in wesentlich zu ihrem Verständnis beitragenden Bestandteilen dargestellt, worauf sie jedoch keineswegs beschränkt ist.

Zwei Nachrichtenübermittlungseinrichtungen C und D sind über ein Kanalpaar L, bestehend aus zwei Übertragungskanälen L1 und L2 für die eine und für die andere Nachrichtenübertragungsrichtung mit einander verbunden. Die Nachrichtenübermittlungseinrichtungen mögen zu zentralen oder dezentralen Steuereinrichtungen (Prozessoren) in Fernsprechvermittlungsanlagen gehören. Hierbei kann es sich zum Beispiel um den Prozessor in einem Konzentrator und um den in einer Anschlußgruppe (vergleiche deutsche Offenlegungsschrift 3 106 903 = VPA 81 P 6209) einer Zeitmultiplex-Fern-sprechvermittlungsanlage han deln, oder um den Prozessor in einem Konzentrator und den einer Mehrfachteilnehmeranschlußschaltung.

Das Kanalpaar L möge Teil eines PCM-Systems mit zwei mal zweiunddreißig Kanälen sein, das heißt, zweiunddreißig Kanäle stehen für die eine Übertragungsrichtung (L1) und zweiunddreißig Kanäle stehen für die andere Übertragungsrichtung (L2) zur Verfügung. Von ihnen dient ein Kanalpaar zur Übertragung von einer Signalisierung dienenden Nachrichten. Hierbei handelt es sich um Nachrichten verschiedener Arten, zum Beispiel Belegungs-kennzeichen, Wahlkennzeichen, Aufschaltekenn-zeichen, Schaltkennzeichen für verschiedene Facilities, Auslösekennzeichen, Gebührenzählin-formationen, Besetztkennzeichen, Wahlendekenn-zeichen, Meldekennzeichen, Schlußzeichen, fer-ner um sicherungstechnische Meldungen, Steuerinformationen zur Verbindungswegeinstellung über Koppeleinrichtungen und derglei chen.

Die Nachrichtenübermittlungseinrichtungen C und D stehen also über ein Kanalpaar L1/L2 miteinander in Verbindung, wodurch Nachrichten, Informationen und Meldungen in jeder der beiden Richtungen auch unabhängig voneinander übertra gen werden können. Diese Übertragung erfolgt in bit-Portionen einheitlichen Wort-Formats, zum Beispiel in bekannter Weise in Form von PCM-Worten von je acht Bit. Hierzu ist jede der beiden Nachrichten-übermittlungseinrichtungen mit einer Sendeeinrich-tung T bzw. X ausgerüstet. Jede Sendeeinrichtung steht mit einem achtstufigen Sende-Schieberegister $t_0$-$t_7$ bzw. $x_0$-$x_7$ in Verbindung, dem ein Sendespeicher t bzw. x zugeordnet ist.

Jede der Nachrichtenübermittlungseinrichtungen weist empfangsseitig eine Empfangseinrichtung U bzw. Y auf, die mit einem ebenfalls achtstufigen Empfangs-Schieberegister $u_0$-$u_7$ bzw. $y_0$-$y_7$ ver-bunden ist. Jedem der beiden Schieberegister ist ein Empfangsspeicher u bzw. y zugeordnet. Ferner sind in beiden Nachrichtenübermittlungseinrichtungen ebenfalls achtstufige Vergleicher v bzw. w vorgesehen, die einem bit-weisen Vergleich zwischen den Inhalten in den Schieberegistergliedern $t_0$-$t_7$ ei-nerseits und $y_0$-$y_7$ andererseits eines Sende-Schieberegisters und eines Empfangs-Schieberegisters dienen. Zur Auswertung der Vergleichsergebnisse dienen Auswerter V bzw. W in jeder der beiden Nachrichtenübermittlungseinrichtungen.

Die zur übermittelnden Nachrichten befinden sich zunächst in den Prozessoren A bzw. B und gelangen durch die Übermittlung zu diesen Prozessoren B bzw. A. Diesen mögen diese Nachrichten zwecks Übermittlung zunächst übergeben, angeboten oder bereitgestellt werden. Dementsprechende weitere Schalteinrichtungen können diese Prozessoren in an sich bekannter Weise beigeordnet sein, also Schalteinrichtungen, die Nachrichtenquellen bzw. Nachrichtensenken darstellen.

Die zu übermittelnden Nachrichten unterscheiden sich in Nachrichten von biz zu sechs verschiedenen Nachrichtenarten. Verschiedene Beispiele solcher Nachrichtenarten wurden bereits genannt. Da die Nachrichten in der jeweils empfangenden Nachrichtenübermittlungseinrichtung zu speichern, zwischenzuspeichern oder ganz oder teilweise zu verarbeiten oder von ihr an eine Nachrichtensenke weiterzuleiten sind, und da hierfür in Abhängigkeit von jeweils gegebenen und gegebenenfalls sich laufend ändernden Betriebssituation Einschränkungen bestehen können, ist eine Nachrichtenübermittlungseinrichtung, die eine Nachricht empfangen soll, je nach der zur Zeit gegebenen Betriebssituation, sowie je nach der gegebenen Art der jeweils zur Nachrichtenübermittlung anstehenden Nachricht empfangsbereit oder nicht. So kann es zum Beispiel sein, daß ein Speicherbereich, der zur Aufnahme von Wahlkennzeichen dient, bereits voll ist, so daß eine Aufnahme weiterer Wahlkennzeichen erst wieder zu späterem Zeitpunkt erfolgen kann. Oder es kann sein, daß infolge Arbeitsüberlastung eines Prozessors dieser zur Zeit keine weiteren Verbindungswünsche mehr entgegennehmen kann, was praktisch bedeutet, daß er für die Aufnahme eines Belegungskennzeichens zur Zeit nicht aufnahmebereit ist.

Für Fälle der zuvor im Sinne von Beispielen angegebenen Art ist vorgesehen, daß den zu übermittelnden Nachrichten jeweils einer von einer Mehrzahl von Nachrichtenarten je eine entsprechende Artinformation über die zur Übermittlung anstehende Nachrichtenart über den betreffenden Nachrichtenkanal vorausgeschickt wird.

Wie bereits ausgeführt wurde, stehen Nachrichten der verschiedenen Nachrichtenarten in jedem der beiden Prozessoren oder in entsprechenden, ihnen beigeordneten Einrichtungen zwecks Nachrichtenübermittlung zu der jeweils anderen Nachrichtenübermittlungseinrichtung an. Ein Prozessor, zum Beispiel der Prozessor A, bildet jeweils pro Nachricht eine ihrer Nachrichtenart entsprechende Artinformation und übergibt diese dem Sendespeicher, zum Beispiel t, in Form einer 8-bit-Parallel-Information. Der Sendespeicher lädt damit das Schieberegister über acht Paralleleingänge seiner Schieberegisterglieder to-t7. t0-t7. Danach bringt die Sendeeinrichtung T die acht Bit der Artinformation über den Kanal L1 zur Aussendung. Sie werden mit Hilfe der Empfangseinrichtung U aufgenommen und dem Schieberegister u7-uo zugeführt.

Damit die Nachrichtenübermittlungseinrichtung, die eine Nachricht an die andere Nachrichtenübermittlungseinrichtung abzusetzen hat, erkennen kann, ob letztere dafür zur Zeit empfangsbereit ist oder nicht, sendet diese vor einer Übermittlung der Nachricht eine die Bereitschaft oder Nichtbereitschaft betreffende Meldung entgegen der Artinformation an die erstgenannte Nachrichtenübermittlungseinrichtung zur Freigabe oder Unterbindung dieser Nachrichtenübermittlung. In diesem Zusammenhang ist vorgesehen, daß gleichzeitig mit der Artinformation in der Gegenrichtung, also von derjenigen Nachrichtenübermittlungseinrichtung, die die betreffende Nachricht aufnehmen soll, zu derjenigen Nachrichtenübermittlungseinrichtung, die diese Nachricht abzusetzen hat, ein jede der verschiedenen möglichen Nachrichtenarten betreffendes Sortiment von einzelnen artspezifischen Meldungen übertragen wird, von denen jede an die erstgenannte Nachrichtenübermittlungseinrichtung die jeweilige Bereitschaft oder Nichtbereitschaft einzeln bezüglich jeder der verschiedenen möglichen Nachrichtenarten meldet. In diesem Zusammenhang sei angenommen, es seien sechs verschiedene Nachrichtenarten insgesamt vorgesehen. Das erste Bit eines PCM-Wortes zur Übermittlung einer Artinformation habe immer den Wert 1. Das zweite bis siebente Bit möge zur Übermittlung von sechs verschiedenen möglichen Artinformationen dienen. Dabei soll also immer einem Bit eine Artinformation fest zugeordnet sein. Das letzte Bit möge das Ende des PCM-Wortes signalisieren und wieder den Wert 1 haben.

Sobald die Übermittlung einer Artinformation gestartet wird, wird diese Tatsache in der jenigen Nachrichtenübermittlungseinrichtung, die eine Nachricht aufnehmen soll, erkannt, zum Beispiel mit Hilfe der Empfangseinrichtung U. Eine entsprechende Meldung wird zu dem betreffenden Prozessor, zum Beispiel B, weitergegeben. Je nach der zur Zeit vorliegenden Betriebssituation, wonach diese Nachrichtenübermittlungseinrichtung (D) für Nachrichten einiger Nachrichtenarten empfangsbereit sein möge, für Nachrichten der übrigen Nachrichtenart aber nicht, hält sie für jede Nachrichtenart eine artspezifische Meldung bereit. Dieses Bereithalten kann durch Speicherung im Sendespeicher x oder im Schieberegister xo-x7 geschehen, solange dieser bzw. dieses nicht zur sendemäßigen Übermittlung einer Nachricht herangezogen wird. Erkennt also der Prozessor B, daß über die Empfangseinrichtung U eine Artinformation eintrifft, erkennt er also den Beginn des Eintreffens dieser Artinformation, so veranlaßt er eine unverzügliche Aussendung des Sortiments von einzelnen artspezifischen Meldungen über den anderen der beiden Kanäle.

Nach dieser Übermittlung der Artinformation von der Nachrichtenübermittlungseinrichtung C und des Sortiments der artspezifischen Meldungen von der Nachrichtenübermittlungseinrichtung D (jeweils zur anderen Nachrichtenübermittlungseinrichtung) mögen diese Artinformationen sowie diese Meldungen außerdem jeweils in der aussendenden Nachrichtenübermittlungseinrichtung gespeichert vorliegen und zwar im jeweiligen Sende-Schieberegister. Bei den beiden Sendevorgängen erfolgt also jeweils keine Löschung der gesendeten Zeichen. Folglich liegen nach der gleichzeitigen oder nahezu gleichzeitigen Übermittlung der Artinformation sowie des Sortiments von artspezifischen Meldungen beide in beiden Nachrichtenübermittlungseinrichtungen gespeichert in den betreffenden Schieberegistern vor. In beiden Nachrichtenübermittlungseinrichtungen erfolgt sodann ein Vergleich der Artinformation mit den artspezifischen Meldungen. Aus beiden Vergleichen ergibt sich, ob die beabsichtigte Nachrichtenübermittlung erfolgen kann oder nicht. Ein Vergleich der Artinformation mit der ihr jeweils entsprechenden artspezifischen Meldung führt also in derjenigen Nachrichtenübermittlungseinrichtung, die eine Nachricht auszusenden hat, zur Freigabe der Nachrichtenübermittlung oder deren Unterbindung bzw. zeitlichen Verschiebung. Ein Vergleich der Artinformation mit der betreffenden artspezifischen Meldung in derjenigen Nachrichtenübermittlungseinrichtung, die die betreffende Nachricht aufnehmen soll, führt hier dazu, daß durch dessen Ergebnis ein anschließender Empfang der betreffenden Nachricht vorbereitet oder übergangen wird, und daß im letzteren Falle der Empfang einer Artinformation einer nächstfolgenden Nachricht vorbereitet wird.

Gemäß dem Ausführungsbeispiel leitet der Beginn der von der Nachrichtenübermittlungseinrichtung C ausgesendeten Artinformation bei ihrem Eintreffen in der Nachrichtenübermittlungseinrichtung D hier die Aussendung des Sortiments von artspezifischen Meldungen ein. Dieser Beginn der in der Nachrichtenübermittlungseinrichtung D eintreffenden Artinformation wird mittels der Empfangseinrichtung U erkannt und dem Prozessor B gemeldet. Dieser veranlaßt unverzüglich die Aussendung des im Sendespeicher X oder im Schieberegister xo-x7 bereitgehaltenen Sortiments von artspezifischen Meldungen. Diese Aussendung wird mittels der Sendeeinrichtung X bewerkstelligt.

Im Unterschied hierzu besteht auch die Möglichkeit, daß der Beginn der Aussendung einerseits der Artinformation und andererseits des Sortiments von artspezifischen Meldungen durch eine gemeinsame dritte Einrichtung, zum Beispiel eine gemeinsame Steuereinrichtung, herbeigeführt wird. Dies kann zum Beispiel in der Weise geschehen, daß von einer gemeinsamen Steuereinrichtung ein Befehl an eine der Nachrichtenübermittlungseinrichtungen gegeben wird, und daß diese einerseits durch eine Ansteuerung einer anderen Nachrichtenübermittlungseinrichtung per Ansteueradresse einen Abfrageanreiz an sie überträgt, worauf letztere zunächst eine Artinformation in der angegebenen Weise zur Aussendung bringt, andererseits aber bereits gleichzeitig die Aussendung des Sortiments von artspezifischen Meldungen einleitet und abwickelt.

Bei der bisherigen Beschreibung wurde davon ausgegangen, daß eine Nachrichtenübermittlungseinrichtung nur eine einzige Nachricht zu übermitteln hat. Dementsprechend gibt sie auch nur eine einzige Artinformation ab. Entgegen dieser einen Artinformation wird das Sortiment von artspezifischen Meldungen übertragen. Jeder Nachrichtenart ist jeweils eine bestimmte Stelle innerhalb des aus insgesamt acht Bit bestehenden PCM-Wortes zugeordnet. Ist jeweils eine Nachrichtenart durch eine Art information markiert, so möge das betreffende Bit innerhalb des jeweiligen PCM-Wortes den Binärwert 1 haben, wohingegen es anderenfalls den Binärwert 0 hat. Entsprechendes gilt für das Sortiment von artspezifischen Meldungen, die entgegen der Artinformation übermittelt werden.

Hat die Übermittlung einer Artinformation und des Sortiments von artspezifischen Meldungen stattgefunden, so stehen sich im Sende-Schieberegister, zum Beispiel to-t7, und im Empfangs-Schieberegister, zum Beispiel yo-y7, Artinformation und artspezifische Meldungen gemäß den verschiedenen möglichen Nachrichtenarten einzeln gegenüber. Mit Hilfe der Vergleicher v bzw. w ist es dadurch in einfacher Weise möglich, jeweils eine Artinformation mit der artgemäß entsprechenden artspezifischen Meldung zu vergleichen. Mit Hilfe der Auswerter V bzw. W wird festgestellt, zu welcher Artinformation eine artgemäß entsprechende artspezifische Meldung vorliegt. Dies gilt jeweils für beide Nachrichtenübermittlungseinrichtungen, das heißt also sowohl für diejenige, welche eine Nachricht jeweils abzusetzen hat als auch diejenige, welche diese Nachricht aufnehmen soll.

Darüber hinaus besteht auch die Möglichkeit, daß zugleich mehrere Artinformationen, die mehrere zugleich von einer Nachrichtenübermittlungseinrichtung zur Übermittlung an stehende Nachrichten verschiedener Nachrichtenarten betreffen, übertragen werden. Dies geht also davon aus, daß in einer Nachrichtenübermittlungseinrichtung gleichzeitig mehrere Nachrichten verschiedener Nachrichtenarten vorliegen, die zur jeweils anderen Nachrichtenübermittlungseinrichtung übertragen werden sollen. In diesem Zusammenhang ist weiterhin vorgesehen, daß sowohl in der einen als auch in der anderen Nachrichtenübermittlungseinrichtung der bereits beschriebene Vergleich entsprechend mehrfach erfolgt. In diesem Zusammenhang wurde bereits auf den entsprechend den mehrstufigen Schieberegistern ebenfalls mehrstufigen Vergleicher v bzw. w hingewiesen, der einen Vergleich bit-weise pro PCM-Wort ermöglicht. In diesem Zusammenhang ist weiterhin vorgesehen, daß in beiden Nachrichtenübermittlungseinrichtungen eine Prioritätsreihenfolge bezüglich aller Nachrichtenarten gespeichert ist. Dies ist dadurch gegeben, daß die Schieberegisterglieder in einer festen Reihenfolge geordnet sind, und daß auch die einzelnen Vergleicherstufen vo-v7, bzw. wo-w7, ebenfalls in einer festen Reihenfolge geordnet sind, aus der sich die genannte Prioritätsreihenfolge ableitet. Gemäß dieser in beiden Nachrichtenübermittlungseinrichtungen gespeicherten Prioritätsreihenfolge bezüglich aller möglicher Nachrichtenarten wird nach Übermittlung einer Mehrzahl von Artinformationen in einem PCM-Wort und nach Übermittlung eines entsprechenden Sortiments von art spezifischen Meldungen in beiden Nachrichtenübermittlungseinrichtungen mit Hilfe der Auswerter V und W diejenige Nachrichtenart festgestellt, die gemäß den vorliegenden Artinformationen sowie gemäß den vorliegenden artspezifischen Meldungen, sowie gemäß den hieraus gezogenen Vergleichen und schließlich gemäß der genannten Prioritätsreihenfolge anschließend zur Übermittlung zu kommen hat. Von den mehreren zur Übermittlung anstehenden Nachrichten verschiedener Nachrichtenarten wird also immer nur eine Nachricht einer Nachrichtenart ausgewählt und übermittelt, und dann beginnt das Spiel von vorne durch Übermittlung der Artinformationen der übrigen zur Übermittlung anstehenden Nachrichten, sowie der entsprechenden artspezifischen Meldungen usw.

Es besteht auch die Möglichkeit, daß von jeder der beiden Nachrichtenübermittlungseinrichtungen je eine Artinformation und je ein Sortiment von Meldungen zur jeweils anderen Nachrichtenübermittlungseinrichtung ausgesendet wird, und daß in jeder der beiden Nachrichtenübermittlungseinrichtungen anhand der jeweils ausgesendeten Artinformation dementsprechend eine der empfangenen artspezifischen Meldungen ausgewählt wird. Auf diese Weise werden dann also zwei ausgewählte artspezifische Meldungen gewonnen. In diesem Zusammenhang ist weiterhin vorgesehen, daß für die von jeder der beiden Nachrichtenübermittlungseinrichtungen sendbaren Nachrichtenarten in beiden Nachrichtenübermittlungseinrichtungen Prioritätswerte gespeichert sind, und daß nach Maßgabe dieser Prioritätswerte eine der beiden ausgewählten Meldungen bestimmt wird. Anschließend erfolgt die Übermittlung der Nachricht entsprechend dieser Meldung.

Die weitere Beschreibung wendet sich nun solchen technischen Merkmalen im Ausführungsbeispiel der auszugsweise erläuterten Schaltungsanordnung zu, die den Umfang von einzelnen zu übermittelnden Nachrichten betreffen. Bereits in bekannten Schaltungsanordnungen wird in Zusammenhang von über bidirektionale Nachrichtenwege zu übermittelnden Nachrichten jeweils einer von einer Mehrzahl von verschiedenen Nachrichtenarten eine Längenangabe gebildet und vor der Nachrichtenübermittlung übertragen. Dies gilt auch für das vorliegende Ausführungsbeispiel. Ferner wird hier auch eine die jeweilige Nachrichtenart bezeichnende Artinformation gebildet, wie zuvor ausführlich erläutert wurde. Aus der bisherigen Beschreibung geht weiterhin hervor, daß von einer Nachrichtenübermittlungseinrichtung, die eine Nachricht an eine andere Nachrichtenübermittlungseinrichtung abzugeben hat, eine der Nachrichtenart dieser Nachricht jeweils entsprechende Artinformation vorausgeschickt wird. Ferner wurde erläutert, daß praktisch gleichzeitig mit der Übermittlung der Artinformation die Übermittlung des Sortiments von artspezifischen Meldungen in der Gegenrichtung erfolgt.

Die bereits genannte Längenangabe wird im Unterschied zubekannten Anordnungen in Gegenrichtung zur Artinformation bzw. zu den Artinformationen übertragen. Die Längenangabe betrifft auch nicht die Länge der jeweils zur Übermittlung in einer Nachrichtenübermittlungseinrichtung anstehenden Nachricht, sondern die Längenangabe gibt im vorliegenden Falle an, für welchen durch die sich gegebenenfalls laufend ändernde Betriebssituation momentan gegebenen Umfang einer Nachricht der betreffenden Nachrichtenart diejenige Nachrichtenübermittlungseinrichtung empfangsbereit ist, die die jeweilige Nachricht empfangen soll. Wie bereits ausgeführt wurde, ist die zu verschiedenen Zeitpunkten bestehende jeweilige Betriebssituation von Zeitpunkt zu Zeitpunkt nicht gleich. Sie kann sich laufend ändern. Dies kann zum Beispiel den Füllungsgrad eines zur Zwischenspeicherung von Wahlkennzeichen vorgesehenen Speicherabschnittes betreffen. Während die bisherige Beschreibung sich auf den Aspekt konzentrierte, ob eine jeweils zu übermittelnde Nachricht von derjenigen Nachrichtenübermittlungseinrichtung empfangen werden kann, für die sie bestimmt ist, oder ob sie diese Nachricht nicht empfangen kann, wird anschließend der Betriebsfall erläutert, daß die betreffende Nachrichtenübermittlungseinrichtung eine Nachricht der bestimmten Art nur bis zu einem gewissen Nachrichtenumfang aufzunehmen in der Lage ist. Es wird also zunächst in der weiter oben ausführlich beschriebenen Weise mit Hilfe von Artinformation, bzw. Artinformationen, und artspezifischen Meldungen festgestellt, ob eine Nachrichtenübermittlung der betreffenden Nachrichtenart im jeweils gegebenen Zeitpunkt überhaupt möglich ist. Wird eine Nachrichtenübermittlung der jeweiligen Nachrichtenart als grundsätzlich möglich festgestellt, so überträgt diejenige Nachrichtenübermittlungseinrichtung, die die Nachricht aufnehmen soll, entgegen der Artinformation eine Längenangabe, mit der signalisiert wird, welche Länge, zum Beispiel welche Anzahl von PCM-Worten, eine zur Übermittlung anstehende Nachricht maximal haben darf. Im Gegensatz zu bekannten Anordnungen wird die Artinformation zuerst und die Längenangabe danach übertragen. Die Längenangabe wird anschließend an das Sortiment von artspezifischen Meldungen in einem zweiten PCM-Wort übermittelt.

Die entgegen der Artinformation nach dem Sortiment von artspezifischen Meldungen übertragene Längenangabe wird mit Hilfe der betreffenden Empfangseinrichtung, zum Beispeil Y aufgenommen und gelangt über das Empfangs-Schieberegister zum Beispiel yo-y7, zum Empfangsspeicher y, von wo sie zum Prozessor, zum Beispiel A derjenigen Nachrichtenübermittlungseinrichtung, zum Beispiel C, übergeben wird, von der aus die beabsichtigte Nachrichtenübermittlung erfolgen soll. Der betreffende Prozessor, zum Beispiel A, vergleicht nun die erhaltene Längenangabe mit der Länge der zu übermittelnden Nachricht. Gemäß dem gewonnenen Vergleichsergebnis findet dann die beabsichtigte Nachrichtenübermittlung statt oder nicht, bzw. diese Nachrichtenübermittlung wird auf einen späteren Zeitpunkt verschoben, zu dem dann die ganzen hierfür erforderlichen Vorgänge in der bereits beschriebenen Weise erneut gestartet werden.

Abschließend ist zusammenfassend also festzustellen, daß die Artinformation der Nachricht vorausgeschickt wird, daß zuerst die Artinformation und danach die Längenangabe, und daß die Artinformation in der Richtung der zu übermittelnden Nachricht übertragen wird, dagegen die Länganangabe in der entgegengesetzten Richtung. Im Gegensatz zu bekannten Anordnungen wird die Artinformation nicht empfangsseitig aus einer mit der Nachricht übertragenen Adresse abgeleitet, sondern sie wird sendeseitig gebildet und der zu übermittelnden Nachricht vorausgeschickt. die Längenangabe bezieht sich auf die durch die Artinformation signalisierte jeweilige Nachrichtenart und gibt jeweils für diese den Umfang an, den eine zu übertragende Nachricht maximal haben darf. Die zurückübertragene Längenangabe sorgt bei einer durch die momentane Betriebssituation gegebenen beschränkten Aufnahmekapazität der empfangenden Nachrichtenübermittlungseinrichtung für Nachrichten der jeweils signalisierten Nachrichtenart gegebenenfalls dafür, daß die betreffende Nachrichtenübermittlung verhindert wird oder auf einen spätern Zeitpunkt verschoben wird, wodurch eine Verstümmelung von Nachrichten oder Engpässe beim Nachrichtenempfang vermieden werden und daß die betreffende Nachrichtenübermittlung stattfinden kann, wenn eine dafür geeignete Betriebssituation wiedergekehrt ist.

Bezugszeichenliste

C, D Nachrichtenübermittlungseinrichtung
L Kanalpaar
L1, L2 Übertragungskanäle
T Sendeeinrichtungen
t Sende-Speicher
To,..., t7 Schieberegister
V Auswerter
v Vergleicher
vO,... v7 Vergleicherstufen
y Empfangseinrichtung
yO,... y7 Empfangs-Schieberegister
A, B Prozessoren
U Empfangseinrichtung
U Empfangsspeicher
uO,...,u7 Empfangs-Schieberegister
W Auswerter
w Vergleicher
wO,...w7 Vergleicher-Stufen
X Sendeeinrichtung
x Sende-Speicher
xO,...x7 Schieberegister

**Patentansprüche**

1. Nachrichtenübermittlungsverfahren für Fernmeldeanlagen, insbesondere Fernsprechvermittlungsanlagen, in denen in Zusammenhang von über bidirektionale Nachrichtenwege zu übermittelnden Nachrichten jeweils einer von einer Mehrzahl von verschiedenen Nachrichtenarten eine Längenangabe gebildet und vor der Nachrichtenübermittlung übertragen wird, sowie eine die jeweilige Nachrichtenart bezeichnende Artinformation gebildet wird, **dadurch gekennzeichnet,** daß von einer Nachrichtenübermittlungseinrichtung, die eine Nachricht an eine andere Nachrichtenübermittlungseinrichtung abzugeben hat, eine der Nachrichtenart dieser Nachricht jeweils entsprechende Artinformation vorausgeschickt wird, und daß eine Längenangabe in Gegenrichtung übertragen wird, die angibt, für welchen durch die sich gegebenenfalls laufend ändernde Betriebssituation momentan gegebenen Umfang einer Nachricht der betreffenden Nachrichtenart die andere Nachrichtenübermittlungseinrichting empfangsbereit ist, und daß die Artinformation zuerst und die Längenangabe danach übertragen wird.

2. Nachrichtenübermittlungsverfahren nach Anspruch 1, **dadurch gekennzeichnet,** daß von der einen Nachrichtenübermittlungseinrichtung, in der mehrere Nachrichten verschiedener Arten zur Übermittlung an die andere Nachrichtenübermittlungseinrichtung vorliegen, dementsprechend mehrere Artinformationen der an die andere Nachrichtenübermittlungseinrichtung abzugebenden Nachrichten vorausgeschickt werden, und daß die andere Nachrichtenübermittlungseinrichtung eine Auswahl bezüglich der mehreren Nachrichtenarten trifft und eine entsprechende Artinformation an die eine Nachrichtenübermittlungseinrichtung zurückgibt und anschließend eine die ausgewählte Nachrichtenart betreffende Längenangabe überträgt.

3. Nachrichtenübermittlungsverfahren nach Anspruch 1, **dadurch gekennzeichnet,** daß gleichzeitig mit der Artinformation in der Gegenrichtung ein jede der verschiedenen Nachrichtenarten betreffendes Sortiment von einzelnen artspezifischen Meldungen übertragen wird, von denen jede bezüglich je einer der verschiedenen Nachrichtenarten die Empfangsbereitschaft für eine Nachricht der jeweiligen Nachrichtenart meldet.

4. Nachrichtenübermittlungsverfahren nach Anspruch 3, **dadurch gekennzeichnet,** daß von jeder der beiden Nachrichtenübermittlungseinrichtungen wenigstens je eine Artinformation und je ein Sortiment von Meldungen zur jeweils anderen Nachrichtenübermittlungseinrichtung ausgesendet wird, daß in jeder der beiden Nachrichtenübermittlungseinrichtungen anhand der jeweils ausgesendeten Artinformation dementsprechend eine der empfangenen Meldungen ausgewählt wird, und daß für die von jeder der beiden Nachrichtenübermittlungseinrichtungen sendbaren Nachrichtenarten in beiden Nachrichtenübermittlungseinrichtungen Prioritätswerte gespeichert sind, und daß bei Gewinnung zweier ausgewählter Meldungen eine nach Maßgabe dieser Prioritätswerte ausgewählt wird.

**Claims**

1. Message transmission method for telecommunication exchanges, especially telephone exchanges, in which, in connection with messages to be transmitted via bidirectional message routes, in each case there is formed from one of a plurality of different message types a length indication which is transmitted before the message transmission, and a modal information item designating the respective message type is formed, characterized in that a message transmission device which has a message to issue to another message transmission device sends in advance a modal information item corresponding in each case to the message type of this message, and in that a length indication is transmitted in the opposite direction which indicates the extent of a message of the corresponding message type, which extent is determined at that instant by the possibly continuously changing operating situation, which the other message transmission device is ready to receive, and in that the modal information item is transmitted first and the length indication is transmitted thereafter.

2. Message transmission method according to Claim 1, characterized in that one message transmission device in which a plurality of messages of different types are present for transmission to the other message transmission device accordingly sends in advance a plurality of modal information items of the messages to be output to the other message transmission device, and in that the other message transmission device selects one of the several message types and returns a corresponding modal information item to the one message transmission device and subsequently transmits the length indication corresponding to the selected message type.

3. Message transmission method according to Claim 1, characaterized in that, at the same time as the modal information item in the opposite direction, a range of individual type-specific messages corresponding to each of the various message types is transmitted, each of which signals, with respect to each one of the various message types, the receive readiness for a message of the respectiv message type.

4. Message transmission method according to Claim 3, characterized in that at least one modal information item each and one range of messages each is sent out by each of the two message transmission devices to the respective other message transmission device, in that accordingly one of the received messages is selected in each of the two message transmission devices on the basis of the modal information item sent out in each case, and in that there are stored in both message transmission devices priority values for the message types which can be sent by each of the two message transmission devices, and in that, on obtaining two selected messages, one is selected according to these priority values.

Revendications

1. Procédé de transmission d'informations pour des installations de télécommunications, notamment des centraux téléphoniques, dans lesquels une indication de longueur est formée en liaison avec des informations qui doivent être transmises par l'intermédiaire de voies bidirectionnelles de transmission d'informations et sont respectivement d'un type faisant partie d'une multiplicité de types différents d'informations, et est transmise avant la transmission des informations, et une information de type, qui caractérisé le type respectif d'informations à transmettre, est formée, caractérisé par le fait qu'un dispositif de transmission d'informations, qui doit envoyer une information à un autre dispositif de transmission d'informations, envoie préablablement une information de type, concernant respectivement le type de cette information à transmettre, et que dans le sens opposé se trouve transmise une indication de longueur indiquant quel volume, déterminé instantanément par la situation de fonctionnement qui varie éventuellement en permanence, d'une information à transmettre du type considéré, l'autre dispositif de transmission d'informations est prêt à recevoir, et que l'information de type est transmise en premier lieu et que l'indication de longueur est transmise ensuite.

2. Procédé de transmission d'informations suivant la revendication 1, caractérisé par le fait qu'un dispositif de transmission d'informations, dans lequel sont présentes plusieurs informations de différents types en vue de leur retransmission à d'autres dispositifs de transmission d'informations, envoie préablablement, de façon correspondante, plusieurs informations concernant le type des informations devant être envoyées à l'autre dispositif de transmission d'informations, et que cet autre dispositif de transmission d'informations exécute une sélection parmi les différents types d'informations à transmettre, renvoie une information correspondante de type au premier dispositif de transmission d'informations et transmet, ensuite, une indication de longueur concernant le type d'informations sélectionné.

3. Procédé de transmission d'informations selon la revendication 1, caractérisé en ce qu'en même temps que l'information de type se trouve transmis, dans la direction opposée, un assortiment, concernant chacun des différents types d'informations, de signalisations individuelles, qui sont spécifiques aux types et dont chacune signale, en rapport avec l'un respectif des différents types d'informations, l'état prêt à la réception pour une information à transmettre du type considéré.

4. Procédé de transmission d'informations suivant la revendication 3, caractérisé par le fait que chacun des deux dispositifs de transmission d'informations envoie au moins respectivement une information de type et respectivement un assortiment de signalisations pour l'autre dispositif respectif de transmission d'informations, que dans chacun des deux dispositifs de transmission d'informations, l'une des signalisations reçues est par conséquent sélectionnée en fonction de l'information de type respectivement émise, et que des valeurs de priorité sont mémorisées, dans les deux dispositifs de transmission d'informations, pour les types d'informations pouvant être émis par chacun des deux dispositifs des transmission d'informations, et que, lors de l'obtention de deux signalisations sélectionnées, l'une d'elles est sélectionnée en fonction de ces valeurs de priorité.